# EUROPÄISCHE PATENTSCHRIFT

(11) **EP 1 886 056 B1**
(45) Veröffentlichungstag und Bekanntmachung des Hinweises auf die Patenterteilung: **12.08.2009**
(21) Anmeldenummer: 06741014.2
(22) Anmeldetag: 26.05.2006
(51) Int. Cl.: F16L 15/00, F16L 13/02

(54) **ROHRVERBINDUNG**
PIPE CONNECTION
RACCORD DE TUBES

(30) Priorität: 27.05.2005 AT 3502005
(43) Veröffentlichungstag der Anmeldung: 13.02.2008
(73) Patentinhaber: "ALWAG" Tunnelausbau Gesellschaft m.b.H., 4061 Pasching (AT)
(72) Erfinder: MOCIVNIK, Josef, A-8753 Fohnsdorf (AT); WAGNER, Alfred, A-4020 Linz (AT)
(74) Vertreter: Miksovsky, Alexander
(86) Internationale Anmeldenummer: PCT/AT2006/000215
(87) Internationale Veröffentlichungsnummer: WO 2006/125241

(56) Entgegenhaltungen:
- EP-A- 0 032 265
- FR-A- 664 685
- GB-A- 758 333
- US-A- 2 239 942
- US-A- 4 732 416
- US-B1- 6 752 436

## Beschreibung

Die vorliegende Erfindung bezieht sich auf eine Rohrverbindung zwischen einem ersten Rohr und einem zweiten Rohr, wobei ein Endabschnitt des einen Rohrs von einem Endabschnitt des anderen Rohrs übergriffen wird und/oder in die zueinander gewandten Endabschnitte der Rohre jeweils ein Verbindungselement in die Endabschnitte eingesetzt ist und wobei die Rohre miteinander insbesondere lösbar verbindbar, vorzugsweise miteinander verschraubbar sind, wobei der Endabschnitt des vom anderen Rohr übergriffenen Rohrs und/oder wenigstens ein in einen Endabschnitt eines Rohrs eingesetztes Verbindungselement an seinem zum Rohrinneren gewandten Ende mit einem Bereich mit einer verringerten Festigkeit im Vergleich zu einem daran anschließenden Teilbereich ausgebildet ist, wobei der Bereich mit verringerter Festigkeit an seinem Innenumfang mit einer Mehrzahl von Vertiefungen bzw. Ausnehmungen ausgebildet ist.

Im Zusammenhang mit Rohrverbindungen zwischen einem ersten Rohr und einem zweiten Rohr sind unterschiedliche Ausführungsformen bekannt, wobei beispielsweise ein Endabschnitt eines Rohrs in einen Endabschnitt eines damit zu verbindenden zweiten Rohrs eintritt bzw. von diesem übergriffen wird und darüber hinaus eine Verbindung zwischen den Rohren vorgesehen wird. Im Fall einer lösbaren Verbindung wird beispielsweise eine Verschraubung durch entsprechende Gewinde vorgesehen. Alternativ ist es möglich, miteinander zu verbindende Rohre zu verkleben, zu verschweißen oder dgl., wobei eine derartige Verbindung üblicherweise nicht ohne eine Zerstörung gelöst werden kann. Darüber hinaus ist es bekannt, in Endabschnitte von miteinander zu verbindenden Rohren bzw. Rohrelementen Verbindungselemente einzusetzen, welche miteinander zu verbinden sind, wobei eine insbesondere lösbare Verbindung wiederum beispielsweise durch eine Verschraubung oder einen Bajonettverschluß erzielt werden kann.

Bei der Herstellung von Verankerungen bzw. Rohrschirmen zur Herstellung von Tunnels oder allgemeinen Durchtritten im Gesteins- oder Bodenmaterial werden üblicherweise derartige Verankerungen oder Rohrschirme jeweils durch Bohren eines Lochs über eine vorbestimmte Länge hergestellt, worauf entsprechende Rohrverlängerungen vorgenommen werden, um eine gegebenenfalls große Länge derartiger Verankerungen oder Elemente von Rohrschirmen für eine ordnungsgemäße Sicherung zu erzielen. Bei der Herstellung von derartigen Verankerungen oder Rohrschirmen ist weiters davon auszugehen, daß beispielsweise aufgrund von unterschiedlichem Boden- oder Gesteinsmaterial teilweise Verschiebungen zwischen einzelnen Boden- oder Gesteinsschichten auftreten können, welche eine Belastung bzw. Beanspruchung von Verankerungen bzw. Elementen von Rohrschirmen quer bzw. geneigt zur Längserstreckung eines derartigen rohrförmigen Elements bewirken können. Falls eine derartige geneigt bzw. quer zu einer Längserstreckung bzw. -achse des rohrförmigen Elements auftretende Beanspruchung im Bereich einer Verbindung von aneinander anschließenden Rohren bzw. Rohrelementen auftritt, kann insbesondere für den Fall, daß die ineinander eingreifenden bzw. einander überlagernden Endabschnitte der miteinander zu verbindenden Rohre bzw. Rohrelemente unmittelbar aneinander anliegen, der innen liegende, gegebenenfalls scharf kantige Endabschnitt des einen Rohrs den umgebenden Endabschnitts des anderen Rohrs beschädigen und gegebenenfalls zerstören, so daß im Bereich dieser Verbindung die gewünschte Unversehrtheit des gesamten rohrförmigen Elements nicht mehr gegeben ist bzw. diese beeinträchtigt ist. Im Fall eines Verwendens eines derartigen, aus mehreren Rohren bzw. Rohrelementen bestehenden rohrförmigen Elements als Verankerung oder Element eines Rohrschirms wird dadurch unmittelbar die zu erzielende Sicherung beeinflußt bzw. ist nicht mehr gegeben.

Ausführungsformen von Rohrverbindungen, bei welchen im Bereich eines innenliegenden Endes der Rohrverbindung eine Schwächung zur Verfügung gestellt ist, um bei einer geringfügigen Neigung eine Beschädigung oder Zerstörung des umgreifenden Rohrabschnitts zu vermeiden bzw. zu verringern, sind beispielsweise der EP-A 0 032 265, der GB-A 758 333 oder der US-B 6,752,436 zu entnehmen.

Darüber hinaus ist eine Rohrverbindung der eingangs genannten Art der US-A 2,239,942 zu entnehmen, wobei in einem vorderen Endabschnitt des innenliegenden und durch das andere Rohr übergriffenen Endabschnitts nebeneinander zwei Vertiefungen vorgesehen sind, welche in Umfangsrichtung verlaufen, wobei in einer der Vertiefungen ein Sicherungsring eingelegt werden kann, um eine Einstellung der Nachgiebigkeit bzw. Elastizität des innenliegenden Endabschnitts zu ermöglichen.

Die vorliegende Erfindung zielt daher darauf ab, ausgehend von einer Rohrverbindung der eingangs genannten Art diese dahingehend weiterzubilden, daß selbst im Fall einer außermittigen Beanspruchung bzw. Beanspruchung quer bzw. geneigt zur Längsachse der Rohrverbindung zwischen einem ersten und zweiten Rohr die Unversehrtheit der Verbindung und insbesondere eines Mantelbereichs eines das jeweilige andere Rohr übergreifenden Endabschnitts sichergestellt werden.

Zur Lösung dieser Aufgaben ist eine Rohrverbindung der eingangs genannten Art im wesentlichen dadurch gekennzeichnet, daß der Abstand zwischen benachbarten Vertiefungen bzw. Ausnehmungen in Richtung zum Ende des Bereichs mit verringerter Festigkeit abnimmt. Da der in ein damit zu verbindendes Rohr eintretende Endabschnitt oder wenigstens ein Endabschnitt eines zwischen zwei miteinander zu verbindenden Rohren eingesetzten Verbindungselements mit einem Bereich verringerter Festigkeit mit mehreren Vertiefungen bzw. Ausnehmungen im Vergleich zu einem daran anschließenden Teilbereich ausgebildet ist, wird sichergestellt, daß selbst für den Fall einer außermittigen Beanspruchung im Bereich der Rohrverbindung zwischen dem ersten Rohr und dem zweiten Rohr und einer dadurch erfolgenden Kontaktierung zwischen dem innen liegenden Endabschnitt und dem außen liegenden Mantelbereich des übergreifenden Endabschnitts die Unversehrtheit der Verbindung in diesem Bereich aufrecht erhalten wird und insbesondere eine Zerstörung bzw. Beschädigung des umgebenden Endabschnitts bzw. des Mantelbereichs desselben vermieden wird. Bei einem Auftreten von quer bzw. geneigt zur Längsachse der Rohrverbindung wirkenden bzw. verlaufenden Kräften bzw. Beanspruchungen und einem daraus resultierenden Kippen bzw. Neigen der aneinander anschließenden Rohre bzw. Rohrelemente gelangt zwar der innen liegende Endabschnitt in Kontakt mit dem umgebenden Endabschnitt, wobei jedoch durch den zum Rohrinneren gewandten vorgesehenen Bereich mit verringerter Festigkeit sichergestellt wird, daß dieser Bereich mit verringerter Festigkeit entsprechend deformierbar bzw. verformbar ist und somit der Endabschnitt bzw. der Mantelbereich des umgebenden Rohrs unversehrt bleibt. Die Vertiefungen bzw. Ausnehmungen zur Erzielung der verringerten Festigkeit lassen sich sehr einfach und zuverlässig herstellen. Um bei gleichbleibendem Materialquerschnitt der miteinander zu verbindenden Rohre oder eines in den jeweiligen Endabschnitt der miteinander zu verbindenden Rohre einzusetzenden Verbindungselements dennoch am zum Rohrinneren gewandten Endbereich bzw. Endabschnitt einen Bereich verringerter Festigkeit bei möglichst einfacher Herstellung und somit geringen Produktionskosten zur Verfügung zu stellen, ist vorgesehen, daß der Bereich mit verringerter Festigkeit an seinem Innenumfang mit einer Mehrzahl von Vertiefungen bzw. Ausnehmungen ausgebildet ist. Zur Erzielung einer entsprechend progressiven Abnahme der Festigkeit in Richtung zum freien Ende des aufgenommenen Endabschnitts wird erfindungsgemäß vorgeschlagen, daß der Abstand zwischen benachbarten Vertiefungen bzw. Ausnehmungen in Richtung zum Ende des Bereichs mit verringerter Festigkeit abnimmt.

Gemäß einer bevorzugten Ausführungsform wird vorgeschlagen, daß der Bereich mit verringerter Festigkeit als Bereich mit verringerter Materialstärke ausgebildet ist, wodurch bei vereinfachter Herstellung die Unversehrtheit der Rohrverbindung aufrecht erhalten wird.

Um ein Einschneiden des Bereichs mit verringerter Festigkeit des innen liegendes Endabschnitts in den umgebenden Endabschnitt bzw. Mantelbereich zu verhindern, wird gemäß einer weiters bevorzugten Ausführungsform vorgeschlagen, daß der Bereich verringerter Festigkeit zu seinem freien Ende hin an der Außenoberfläche abgerundet ausgebildet ist. Eine derartige Abrundung am freien Ende ist einfach herstellbar und erlaubt, sicher eine Verletzung des Innenumfangs des umgebenden Endabschnitts zu vermeiden.

Falls im Bereich einer Rohrverbindung außermittige bzw. schräg oder quer zur Längsrichtung der Rohrverbindung verlaufende bzw. einwirkende Kräfte auftreten, ist davon auszugehen, daß das freie Ende des aufgenommenen Endabschnitts bei einem Kippen der aneinander anschließenden Rohre bzw. Rohrelemente am weitesten aus der fluchtenden Lage verformt bzw. deformiert wird. Um dem äußersten Endbereich eine entsprechend verringerte Festigkeit bzw. mit einfachen Maßnahmen eine sich insbesondere gleichmäßig bzw. stetig verändernde Festigkeit zur Verfügung zu stellen, ist gemäß einer weiters bevorzugten Ausführungsform vorgesehen, daß eine Mehrzahl von Vertiefungen bzw. Ausnehmungen vorgesehen ist, deren Breite und/oder Tiefe in Richtung zum freien Ende des Bereichs mit verringerter Festigkeit zunimmt. Dadurch, daß erfindungsgemäß die Breite und/oder Tiefe der vorgesehenen Vertiefungen bzw. Ausnehmungen zum freien Ende des Bereichs mit verringerter Festigkeit zunimmt, wird sichergestellt, daß der Teilbereich, welcher am weitesten in das umgebende Rohr eingetreten ist, mit entsprechend geringster Festigkeit ausgebildet ist.

Wie oben bereits angedeutet, ist es möglich, ein erstes und zweites Rohr unmittelbar miteinander zu verbinden, wobei in diesem Fall die Enden der miteinander zu verbindenden Rohre entsprechend unterschiedlich gestaltet werden müssen, um sicherzustellen, daß ein Endabschnitt von dem Endabschnitt des damit zu verbindenden Rohrs übergriffen werden kann. Insbesondere für eine vereinfachte Herstellung der einzelnen miteinander zu verbindenden Rohre bzw. Rohrelemente, ohne unterschiedliche Ausführungsformen von aneinander angrenzenden bzw. miteinander zu verbindenden Enden berücksichtigen zu müssen, ist es bekannt, in Endabschnitte von miteinander zu verbindenden Rohren jeweils Verbindungselemente einzusetzen, welche eine entsprechend kurze Länge aufweisen und ein einfaches und zuverlässiges Verbinden von aneinander anschließenden Rohren ermöglichen. In diesem Zusammenhang wird erfindungsgemäß einer weiteres bevorzugten Ausführungsform vorgeschlagen, daß die Verbindungselemente, welche in jeweils einen Endabschnitt der miteinander zu verbindenden Rohre einsetzbar sind, von Muffenelementen gebildet sind, welche an ihrem aus dem Rohr jeweils vorragenden Ende mit Befestigungselementen, insbesondere mit einem Innengewinde und einem komplementären Außengewinde versehen sind. Derartige Muffenelemente sind nicht nur einfach herstellbar, sondern erlauben beispielsweise auch, daß die miteinander zu verbindenden Rohre bzw. Rohrelemente, welche gegebenenfalls eine überaus große Länge aufweisen, entsprechend dünnwandig ausgebildet sein können, da der für eine ordnungsgemäße Verbindung der aneinander anschließenden Rohre bzw. Rohrelemente andernfalls vorzusehende erhöhte Materialquerschnitt nicht erforderlich ist. Darüber hinaus ist es möglich, wie bereits oben angedeutet, die Produktion der einzelnen, miteinander zu verbindenden Rohrelemente zu vereinfachen, da in den Endabschnitten keine Vorkehrungen für eine Ausbildung von aufeinander abgestimmten Endbereichen getroffen werden müssen, um ein für eine ordnungsgemäße Verbindung erforderliches Übergreifen der miteinander zu verbindenden Endabschnitt sicherzustellen.

Für ein besonders einfaches und zuverlässiges Festlegen der Verbindungselemente wird darüber hinaus vorgeschlagen, daß die Muffenelemente jeweils einen insbesondere über den gesamten Umfang verlaufenden Anschlag aufweisen, welcher die Eintrittstiefe des Muffenelements in das jeweilige Rohr begrenzt, wobei das Muffenelement im Bereich des Anschlags über eine insbesondere über den gesamten Umfang verlaufende Schweißnaht mit dem Rohr verbindbar ist.

Wie oben bereits angedeutet, können derartige Rohrverbindungen unter Umständen großen und insbesondere außermittigen Beanspruchungen ausgesetzt sein, so daß für eine Erhöhung der Sicherheit der Festlegung der Verbindungselemente in den einzelnen Rohren bzw. Rohrelementen darüber hinaus vorgeschlagen wird, daß in Abstand vom Ende des Rohrs über den Umfang verteilt voneinander beabstandete Durchbrechungen bzw. Durchtrittsöffnungen vorgesehen sind, durch welche eine zusätzliche Verschweißung mit dem eingebrachten Muffenelement erfolgt, wie dies einer weiters bevorzugten Ausführungsform der erfindungsgemäßen Rohrverbindung entspricht.

Die Erfindung wird nachfolgend anhand von in der beiliegenden Zeichnung schematisch dargestellten Ausführungsbeispielen näher erläutert. In dieser zeigen:
Fig. 1 einen schematischen teilweisen Schnitt durch eine erste Ausführungsform einer erfindungsgemäßen Rohrverbindung;
Fig. 2 in vergrößertem Maßstab ein Verbindungselement, welches in ein Rohr gemäß der Ausbildung gemäß Fig. 1 eingesetzt ist;
Fig. 3 in einer zu Fig. 2 ähnlichen Darstellung eine abgewandelte Ausführungsform eines Verbindungselements; und
Fig. 4 einen Teilschnitt durch eine abgewandelte Ausführungsform einer erfindungsgemäßen Rohrverbindung, wobei ein erstes und zweites Rohr unmittelbar miteinander verbunden werden.

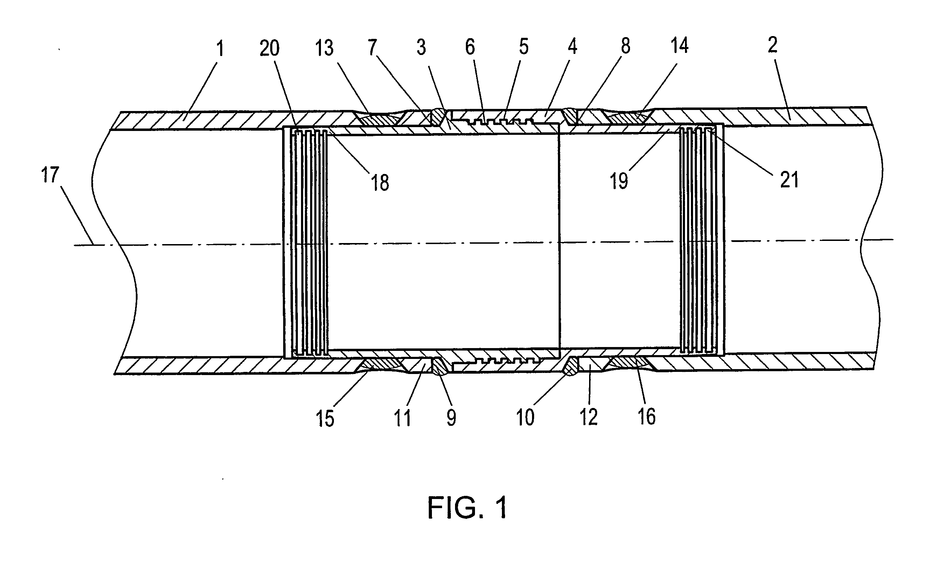

In Fig. 1 ist mit 1 ein erstes Rohr bezeichnet, welches mit einem mit 2 bezeichneten Rohr zu verbinden ist. Zur Verbindung des Rohrs 1 mit dem Rohr 2 ist in jedes Rohr 1 bzw. 2 jeweils ein von einem Muffenelement 3 bzw. 4 gebildetes Verbindungselement eingesetzt, wobei die Muffen- bzw. Verbindungselemente 3 und 4 miteinander über eine schematisch mit 5 bzw. 6 bezeichnete Schraubverbindung verbindbar sind.

Jedes Verbindungselement bzw. Muffenelement 3 bzw. 4 wird in den Endabschnitt des Rohrs 1 bzw. 2 eingesetzt, wobei am Außenumfang des Verbindungselements 3 bzw. 4 jeweils ein Anschlag 7 bzw. 8 vorgesehen ist, um die Einsetzbewegung der Muffen- bzw. Verbindungselemente 3 und 4 zu beschränken. Im Bereich des Anschlagelements 7 und 8 erfolgt eine schematisch mit 9 und 10 angedeutete Verschweißung entlang des Umfangs des freien Endes des Rohrs 1 bzw. 2 mit dem eingesetzten Muffen- bzw. Verbindungselementen 3 bzw. 4.

Zur Unterstützung der Festlegung der Muffen- bzw. Verbindungselemente 3 bzw. 4 in den Rohren 1 und 2 sind zusätzlich in Abstand von den jeweiligen freien Ende 11 bzw. 12 der Rohre 1 bzw. 2 Durchbrechungen bzw. Löcher 13 und 14 vorgesehen, über welche durch schematisch mit 15 und 16 angedeutete Verschweißungen eine zusätzliche Verbindung zwischen dem Rohr 1 bzw. 2 und dem jeweiligen eingesetzten Muffenelement 3 bzw. 4 erfolgt.

Um bei einem Einwirken von Kräften quer bzw. senkrecht auf die mit 17 bezeichnete Längsachse der Rohre 1 und 2 zu verhindern, daß die übergriffenen Endabschnitte der Muffenelemente 3 bzw. 4 den Mantel der Rohre 1 bzw. 2 bei einem gegenseitigen Kippen bzw. Neigen der Rohre 1 und 2 gegeneinander verletzen, sind die Endabschnitte 18 bzw. 19 der Muffenelemente 3 bzw. 4 an ihren zum Rohrinneren gewandten Ende jeweils mit einem Bereich verringerter Festigkeit ausgebildet. Bei der in Fig. 1 dargestellten Ausführungsform ist zur Erzielung der verringerten Festigkeit wenigstens eine und erfindungsgemäβ eine Mehrzahl von Vertiefungen bzw. Ausnehmungen 20 bzw. 21 vorgesehen, wie dies im Detail unter Bezugnahme auf die nachfolgenden Figuren erörtert wird.

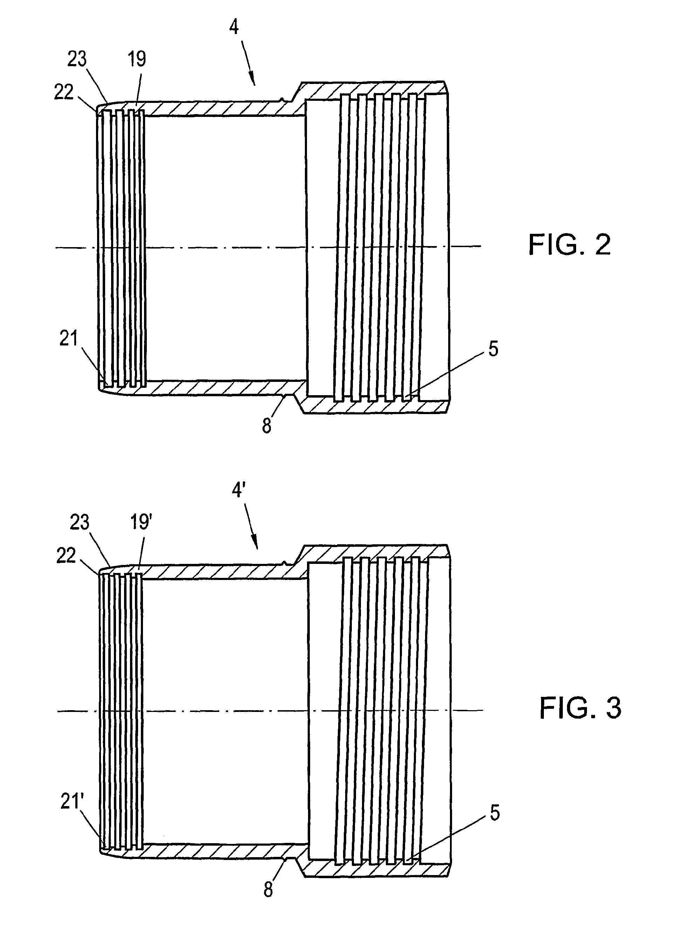

In Fig. 2 ist im vergrößerten Maßstab das Muffenelement 4 dargestellt, wobei das Innengewinde zum Verbinden mit dem nicht dargestellten Muffenelement 3 wiederum mit 5 bezeichnet ist. Wie aus Fig. 2 ersichtlich, ist der Endbereich 19 des Muffenelements 4 mit einer Mehrzahl von Vertiefungen bzw. Ausnehmungen 21 versehen, welche sich jeweils über den gesamten Innenumfang des Muffenelements 4 erstrecken, wobei die Breite der Ausnehmungen bzw. Vertiefungen 21 in Richtung zum freien Ende 22 jeweils zunimmt. Daher wird sichergestellt, daß in Richtung zum freien Ende 22 die Festigkeit des Endabschnitts 19 progressiv abnimmt, so daß bei einem Verkippen bzw. Neigen der Endbereich 19 in Richtung zum freien Ende 22 zunehmend leichter verformbar bzw. deformierbar ist. Darüber hinaus ist in Fig. 2 ersichtlich, daß der Endbereich 19 an seiner äußeren Umfangsoberfläche mit einer Abrundung 23 versehen ist.

In Fig. 2 ist weiters der Anschlag 8 gezeigt, welcher die Einsetzbewegung des Muffenelements 4 in das nicht dargestellte Rohrelement 2 begrenzt.

Bei der in Fig. 3 dargestellten abgewandelten Ausführungsform eines Muffenelements 4' ist ersichtlich, daß die mit 21' bezeichneten Vertiefungen jeweils eine gleiche Breite aufweisen, wobei jedoch die Tiefe derselben in Richtung zum freien Ende 22 zunimmt, so daß ebenso wie bei der Ausführungsform gemäß Fig. 2 sichergestellt wird, daß die Festigkeit im Endabschnitt 19 progressiv abnimmt und dieser in Richtung zum freien Ende 22 somit zunehmend verformbar ist, um nicht den Innenmantel des nicht näher dargestellten Rohrs 2 zu beschädigen.

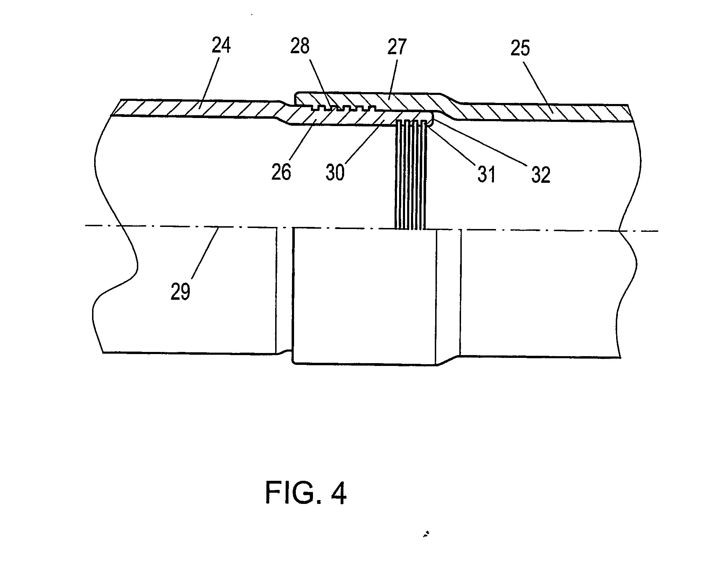

Bei der schematischen Darstellung gemäß Fig. 4 ist ersichtlich, daß ein Rohr 24 unmittelbar mit einem zweiten Rohr 25 verbunden wird, wobei die Enden 26 und 27 der miteinander zu verbindenden Rohre 24 und 25 entsprechend aufeinander abgestimmt ausgebildet sind, um zu ermöglichen, daß das Ende 26 vom Ende 27 übergriffen wird. Für eine lösbare Verbindung der beiden Rohre 24 und 25 ist in Fig. 4 wiederum eine verschraubbare Gewindeverbindung 28 angedeutet.

Um bei der in Fig. 4 dargestellten Ausführungsform bei einem Einwirken von schräg bzw. quer zur Längsachse 29 verlaufenden Kräften zu verhindern, daß der außenliegende Endbereich 27 des Rohrs 25 bei einem Verkippen bzw. Neigen durch den innen liegenden Endbereich 26 beschädigt wird, ist auch bei der in Fig. 4 dargestellten Ausführungsform vorgesehen, daß der zum Rohrinneren gewandete Endabschnitt 30 des Rohrs 24 mit verringerter Festigkeit ausgebildet ist. Ähnlich wie bei den vorangehenden Ausführungsformen ist zum Erzielen der verringerten Festigkeit wiederum eine Mehrzahl von Vertiefungen bzw. Ausnehmungen 31 angedeutet. Diese Ausnehmungen bzw. Vertiefungen 31 können ähnlich wie bei der vorangehenden Ausführungsform unterschiedliche Tiefe und/oder Breite oder auch einen unterschiedlichen Abstand voneinander aufweisen. Weiters ist auch bei der in Fig. 4 dargestellten Ausführungsform ein abgerundeter äußerer Endbereich 32 vorgesehen.

Anstelle der Ausbildung der Vertiefungen bzw. Ausnehmungen 20 bzw. 21 oder 31 zum Erzielen eines Bereichs mit verringerter Festigkeit oder durch Verringern der Materialstärke, wie dies beispielsweise durch Vorsehen der abgerundeten bzw. abgeschrägten Endbereiche 23 bzw. 32 erzielbar ist, könnte zum Erzielen einer verringerten Festigkeit der zum Rohrinneren gewandten Endbereiche eine entsprechende Materialbehandlung dieser Teilbereiche vorgesehen sein, um eine entsprechend verringerte Festigkeit zur Verfügung zu stellen. Die verringerte Festigkeit, durch eine solche Materialbehandlung zu erzielen, liegt nicht im Rahmen der Erfindung.

Während bei der in Fig. 4 dargestellten Ausführungsform die jeweiligen Enden der Rohre 24 bzw. 25 mit zueinander komplementären Endbereichen 26 bzw. 27 ausgebildet sein müssen, um eine unmittelbare Verbindung zu ermöglichen, ist bei der Ausführungsform gemäß Fig. 1 ersichtlich, daß mit einfach herstellbaren und über die gesamte Länge einen einheitlichen Materialquerschnitt aufweisenden Rohre bzw. Rohrelementen 1 bzw. 2 das Auslangen gefunden werden kann, wobei für die Verbindung ebenfalls einfach herzustellende und einzusetzende Verbindungs- bzw. Muffenelemente 3 bzw. 4 vorgesehen werden, welche auch zur Bereitstellung einer entsprechenden Materialstärke insbesondere im Bereich der Gewinde herangezogen werden können. Diese aneinander anschließenden Rohre bzw. Rohrelemente 1 und 2 können nicht nur einfach hergestellt werden, sondern es ist ein üblicherweise geringerer Materialquerschnitt ausreichend, da eine zusätzliche Formgebung bzw. ein zusätzlicher Materialquerschnitt zur Bereitstellung einer sicheren Verbindung an den Enden nicht berücksichtigt werden muß. Somit läßt sich insbesondere bei eine größere Länge aufweisenden Rohren bzw. Rohrelementen auch mit einem geringeren Materialeinsatz sowie geringerem Gewicht das Auslangen finden.

## Patentansprüche

1. Rohrverbindung zwischen einem ersten Rohr (1) und einem zweiten Rohr (2) , wobei ein Endabschnitt des einen Rohrs von einem Endabschnitt des anderen Rohrs übergriffen wird und/oder in die zueinander gewandten Endabschnitte der Rohre (1, 2) jeweils ein Verbindungselement (3, 4) in die Endabschnitte eingesetzt ist und wobei die Rohre miteinander insbesondere lösbar verbindbar, vorzugsweise miteinander verschraubbar sind, wobei der Endabschnitt des vom anderen Rohr übergriffenen Rohrs und/oder wenigstens ein in den Endabschnitt eines Rohrs (1, 2) eingesetztes Verbindungselement (3,.4) an seinem zum Rohrinneren gewandten Ende mit einem Bereich (18, 19) mit einer verringerten Festigkeit im Vergleich zu einem daran anschließenden Teilbereich ausgebildet ist, wobei der Bereich (18, 19, 30) mit verringerter Festigkeit an seinem Innenumfang mit einer Mehrzahl von Vertiefungen bzw. Ausnehmungen (20, 21, 21', 31) ausgebildet ist, **dadurch gekennzeichnet, daß** der Abstand zwischen benachbarten Vertiefungen bzw. Ausnehmungen (21') in Richtung zum Ende des Bereichs (19') mit verringerter Festigkeit abnimmt.

2. Rohrverbindung nach Anspruch 1, **dadurch gekennzeichnet, daß** der Bereich (18, 19, 30) mit verringerter Festigkeit als Bereich mit verringerter Materialstärke ausgebildet ist.

3. Rohrverbindung nach Anspruch 1 oder 2, **dadurch gekennzeichnet, daß** der Bereich (18, 19, 30) verringerter Festigkeit zu seinem freien Ende hin an der Außenoberfläche abgerundet (23, 32) ausgebildet ist.

4. Rohrverbindung nach Anspruch 1, 2 oder 3, **dadurch gekennzeichnet, daß** die Breite und/oder Tiefe der Mehrzahl von Vertiefungen bzw. Ausnehmungen (20, 21, 21', 31) in Richtung zum freien Ende des Bereichs mit verringerter Festigkeit zunimmt.

5. Rohrverbindung nach einem der Ansprüche 1 bis 4, **dadurch gekennzeichnet, daß** die Verbindungselemente (3, 4), welche in jeweils einen Endabschnitt der miteinander zu verbindenden Rohre (1, 2) einsetzbar sind, von Muffenelementen (3, 4, 4') gebildet sind, welche an ihrem aus dem Rohr (1, 2) jeweils vorragenden Ende mit Befestigungselementen (5, 6), insbesondere mit einem Innengewinde und einem komplementären Außengewinde versehen sind.

6. Rohrverbindung nach Anspruch 5, **dadurch gekennzeichnet, daß** die Muffenelemente (3, 4, 4') jeweils einen insbesondere über den gesamten Umfang verlaufenden Anschlag (7, 8) aufweisen, welcher die Eintrittstiefe des Muffenelements (3, 4, 4') in das jeweilige Rohr (1, 2) begrenzt, wobei das Muffenelement (3, 4, 4') im Bereich des Anschlags (7, 8) über eine insbesondere über den gesamten Umfang verlaufende Schweißnaht (9, 10) mit dem Rohr (1, 2) verbindbar ist.

7. Rohrverbindung nach Anspruch 5 oder 6, **dadurch gekennzeichnet, daß** in Abstand vom Ende des Rohrs (1, 2) über den Umfang verteilt voneinander beabstandete Durchbrechungen bzw. Durchtrittsöffnungen (13, 14) vorgesehen sind, durch welche eine zusätzliche Verschweißung (15, 16) mit dem eingebrachten Muffenelement (3, 4) erfolgt.

## Claims

1. A pipe connection between a first pipe (1) and a second pipe (2), wherein an end section of one pipe is overlapped by an end section of the other pipe and/or.a joining element (3, 4) is each inserted in the mutually facing end sections of the pipes (1, 2), and wherein the pipes are, in particular, detachably connectable, preferably screwable, with each other, wherein the end section of the pipe overlapped by the other pipe, and/or at least one joining element (3, 4) inserted in the end section of a pipe (1, 2), is formed with an area (18, 19) of reduced strength relative to an adjoining subarea on its end facing the interior of the pipe, wherein the area (18, 19, 30) of reduced strength is provided with a plurality of depressions or recesses (20, 21, 21', 31) on its inner circumference, **characterized in that** the distance between neighboring depressions or recesses (21') decreases in the direction to the end of the area (19') of reduced strength.

2. A pipe connection according to claim 1, **characterized in that** the area (18, 19, 30) of reduced strength is realized as an area of reduced material thickness.

3. A pipe connection according to claim 1 or 2, **characterized in that** the area (18, 19, 30) of reduced strength is designed to be rounded off (23, 32) towards its free end on its outer surface.

4. A pipe connection according to claim 1, 2 or 3, **characterized in that** the width and/or depth of plurality of depressions or recesses (20, 21, 21', 31) increase(s) in the direction to the free end of the area of reduced strength.

5. A pipe connection according to any one of claims 1 to 4, **characterized in that** the joining elements (3, 4), which are each insertable into a respective end section of the pipes (1, 2) to be connected, are comprised of sleeve elements (3, 4, 4') provided with fastening elements (5, 6), in particular an internal thread and a complementary external thread, on their ends each projecting out of the pipe (1, 2).

6. A pipe connection according to claim 5, **characterized in that** the sleeve elements (3, 4, 4') each comprise a stop (7, 8) extending, in particular, over the entire circumference and limiting the insertion depth of the sleeve element (3, 4, 4') into the respective pipe (1, 2), said sleeve element (3, 4, 4') in the region of the stop (7, 8) being connectable with the pipe (1, 2) by a weld (9, 10) extending, in particular, over the entire circumference.

7. A pipe connection according to claim 5 or 6,
**characterized in that** breakthroughs or passage openings (13, 14) are provided at a distance from the end of the pipe (1, 2) in a manner distributed about its circumference, through which an additional weld (15, 16) is formed with the inserted sleeve element (3, 4).

## Revendications

1. Raccord de tubes entre un premier tube (1) et un deuxième tube (2), où une partie d'extrémité de l'un des tubes est recouverte par une partie d'extrémité de l'autre tube et/ou un élément de raccordement (3, 4) est inséré respectivement dans les parties d'extrémité des tubes (1, 2) tournées l'une vers l'autre, et où les tubes peuvent être raccordés l'un à l'autre notamment de façon démontable, de préférence par vissage, la partie d'extrémité du tube recouvert par l'autre tube et/ou au moins un élément de raccordement (3, 4) inséré dans la partie d'extrémité d'un tube (1, 2) étant réalisé(e), à son extrémité tournée vers l'intérieur du tube, avec une zone (18, 19) à résistance réduite par rapport à une portion contiguë, la zone (18, 19, 30) à résistance réduite comportant sur son pourtour intérieur une pluralité de creux ou d'évidements (20, 21, 21', 31), **caractérisé par le fait que** la distance entre des creux ou évidements (21') voisins diminue en direction de l'extrémité de la zone (19') à résistance réduite.

2. Raccord de tubes selon la revendication 1, **caractérisé par le fait que** la zone (18, 19, 30) à résistance réduite est réalisée comme zone à épaisseur de matière réduite.

3. Raccord de tubes selon la revendication 1 ou 2, **caractérisé par le fait que** la zone (18, 19, 30) à résistance réduite est réalisée avec un arrondi (23, 32) sur sa surface extérieure, en direction de son extrémité libre.

4. Raccord de tubes selon la revendication 1, 2 ou 3, **caractérisé par le fait que** la largeur et/ou la profondeur de la pluralité de creux ou d'évidements (20, 21, 21', 31) augmente en direction de l'extrémité libre de la zone à résistance réduite.

5. Raccord de tubes selon l'une des revendications 1 à 4, **caractérisé par le fait que** les éléments de raccordement (3, 4), qui peuvent être montés respectivement dans une partie d'extrémité des tubes (1, 2) à raccorder, sont constitués d'éléments formant manchons (3, 4, 4') dont l'extrémité dépassant du tube (1, 2) est pourvue respectivement d'éléments de fixation (5, 6), en particulier d'un filet intérieur et d'un filet extérieur complémentaire.

6. Raccord de tubes selon la revendication 5, **caractérisé par le fait que** les éléments formant manchons (3, 4, 4') présentent chacun une butée (7, 8) qui s'étend notamment sur tout le pourtour et limite la profondeur d'engagement du manchon (3, 4, 4') dans le tube respectif (1, 2), le manchon (3, 4, 4') pouvant être relié au tube (1, 2) dans la région de la butée (7, 8), à l'aide d'une soudure (9, 10) qui s'étend notamment sur tout le pourtour.

7. Raccord de tubes selon la revendication 5 ou 6, **caractérisé par le fait que** des perçages ou des ouvertures de passage (13, 14) sont prévus à distance de l'extrémité du tube (1, 2), qui sont répartis sur le pourtour, en étant espacés les uns des autres, et à travers lesquels est réalisé un soudage (15, 16) supplémentaire avec le manchon (3, 4) inséré.
